# EUROPEAN PATENT APPLICATION

(11) **EP 1 035 741 A2**
(43) Date of publication of application: **13.09.2000**
(21) Application number: 00301201.0
(22) Date of filing: 16.02.2000
(51) Int. Cl.: H04Q 7/32

(54) **Wireless communication system having downloadable settings and method of operation**

(30) Priority: 09.03.1999 US 265483
(71) Applicant: Siemens Information and Communication Products, L.L.C., Austin, TX 78728-3811 (US)
(72) Inventor: Lester, Leland, Austin, Texas 78748 (US); Iglehart, David, Austin, Texas 78704 (US); Vela de Casillas, Martha L., Round Rock, Texas 78681 (US); Gilmore, Dillard J., 81545 Munich (US)
(74) Representative: Mohun, Stephen John

(57) **Abstract**

A wireless communication system (12) having a base station (18) and a plurality of wireless communication devices (16) is provided. The base station (18) communicates with the plurality of wireless communication devices (16) and operates to store a plurality of device settings files (22), and download a respective device settings file (22) to a respective wireless communication device (16). Each wireless communication device (16) operates to receive and store the respective device settings file (22) from the base station (18).

## Description

This invention relates generally to the field of communication systems, and more particularly to a wireless communication system having downloadable settings and its method of operation.

Communication systems are used in nearly all aspects of modern society to establish a way for transferring information from one communication device, such as a telephone, to another communication device. One particular type of communication system is a wireless communication system.

Wireless communication systems generally communicate between a base station and a communication device over discrete radio frequency channels. The spectrum of radio frequencies is divided into separate bands that are used for different types of communication systems. In particular, the type of wireless communication system, and thus the type communication device, generally corresponds to the particular band of radio frequencies used in the particular wireless communication system. For example, cordless telephones utilize a different band of radio frequencies than cellular telephones, citizen band (CB) radios, satellite broadcast signals, microwave signals, and the like.

In some applications, the communication device is generic in that no one user uses the same communication device on a regular basis. For example, a cordless phone system often comprises a base station and a number of handsets that are interchangeably operated by various users. In this example, each handset is substantially identical to the other handsets, and each handset is used at different times by different users. To illustrate, assume a research lab utilizes a cordless phone system having a base station and ten different handsets. The handsets are not assigned to individual scientists, but are used interchangeably by the various scientists, which may number more than ten. In addition, due to the need to charge the individual handsets, ten handsets will not be operational at all times.

The generic, or non-personalized, nature of conventional wireless communication systems often limits the number of applications of conventional generic wireless communication systems. In other words, because conventional generic wireless communication systems are not personalized for each user, they are unpopular with users. Personalization may include such personalized settings as a phone list, personal phone number, individual system identifier, and the like. Accordingly, a need has arisen for a wireless communication system having downloadable settings.

The invention is defined in the independent claims, to which reference should now be made. Further advantageous features are detailed in the dependent claims.

Embodiments of the present invention provide a wireless communication system having downloadable settings and method of operation that aim to reduce substantially or eliminate problems associated with prior systems and methods.

In accordance with one embodiment of the present invention, a wireless communication system is provided. The wireless communication system comprises a base station and a number of communication devices. The base station communicates with the communication devices, operates to store a number of files such as personal settings files and downloads one, such as an individual personal settings file to an individual communication device. Each communication device may operate to receive and store the respective individual personal settings file. In a particular embodiment, the wireless communication system further comprises a security system, such as a password, that operates to prevent unauthorized downloading of the individual personal settings tile. In another embodiment, the personal settings file comprises a personal phone number. Additionally or alternatively, the base station comprises an access system having a number of privilege levels that operate to restrict the operation of the wireless communication system.

Technical advantages of embodiments of the present invention include providing a wireless communication system that has wireless communication devices that can be downloaded with various types of personalized information, such as a phone list, day planner information, personal phone number, individual system identifier, and the like. Accordingly, the wireless communication system is flexible and can change with the needs of the user.

Yet another technical advantage of embodiments of the present invention is that the wireless communications system may incorporate a security system that protects the personal settings file of each individual. For example, the security system may include a password function. The password may be entered into the communication device prior to the personal settings file being downloaded to the communication device.

A further possible technical advantage of the present invention is that the wireless communication system may include a privilege access system having a number of privilege levels. The various privilege levels differentiate user access to the wireless communication system. For example, not all users should have the ability to make long distance phone calls. A privilege level can be associated with the users that can make long distance phone calls, and a different privilege level can be associated with users that cannot make long distance phone calls.

Other technical advantages will be readily apparent to one skilled in the art from the following figures, descriptions, and claims.

For a more complete understanding of the present invention and the advantages thereof, reference is now made to the following description of embodiments thereof taken in conjunction with the accompanying drawings, wherein like referenced numerals represent like parts, in which:
FIGURE 1 illustrates a block diagram of a simplified communication system using a wireless communication system in accordance with an embodiment of the present invention;
FIGURE 2 is a flow diagram illustrating a downloading operation of a device settings program; and
FIGURE 3 is a flow diagram illustrating an uploading operation of the device settings program.

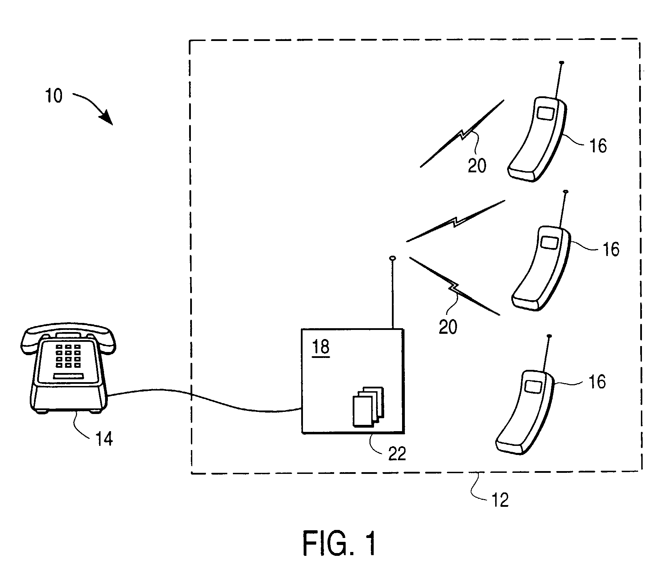

FIGURES 1 through 3 illustrate a wireless communication system having downloadable settings and method of operation. As described in greater detail below, the wireless communication system comprises a base station that operates to communicate with a number of communication devices. Each communications device can receive a personal settings file from the base station. The downloaded device settings file configures the communication device in accordance with the personalized user information contained in the device settings file. Accordingly, any communication device can be personalized to each user.

FIGURE 1 is a block diagram illustrating a simplified communication system 10 comprising a wireless communication system 12 and a peripheral communication device 14. The wireless communication system 12 comprises a number of wireless communication devices 16 and a base station 18. The base station 18 communicates with the communication devices 16 over a number of radio frequency communication channels 20.

The wireless communication system 12, as illustrated in FIGURE 1, is a cordless telephone system. In this embodiment the wireless communication device 16 comprises a handset that communicates with the base station 18 over discrete radio frequency channels 20. Although the wireless communication system 12 is illustrated as a cordless telephone system, it will be understood that the wireless communication system 12 may comprise any suitable type of wireless communication system. For example, the wireless communication system 12 may comprise a cellular phone system, Local Multiple Distribution Service (LMDS), and the like, without departing from the scope of the present invention.

The communication channels 20 may comprise any suitable band of radio frequencies. In particular, the type of wireless communication system 12 generally determines the band of radio frequencies used as communication channels 20. A number of discrete radio frequencies within the band are generally used for the communication channels 20. Accordingly, the greater the width of the radio frequency band, the greater the number of communication channels 20 that can be utilized by the wireless communication system 12.

The wireless communication device 16 generally comprises a transceiver for two-way communication with the base station 18. In one embodiment, the wireless communication device 16 comprises a cordless telephone handset. In other embodiments, the wireless communication device 16 may comprise a cellular phone, a personal digital assistant, and other suitable receiver or transceiver.

The wireless communication device 16 also comprises a memory (not expressly shown) for storing a device settings file, described in greater detail below. The device settings file comprises personalized user information that operates to configure the wireless communication device 16. Specifically, the device settings file personalizes the wireless communication device 16, thereby improving the user-friendliness of the wireless communication device 16. Accordingly, the wireless communication system 12 is flexible and changes with the needs of the customer and each user.

The base station 18 also generally comprises a transceiver for communicating with the wireless communication devices 16. The base station 18 operates to store a number of individual device settings files 22. As will be described in greater detail below, each device settings file 22 is personalized by a respective user and saved by the base station 18. The user's respective device settings file 22 can be downloaded from the base station 18 to the wireless communication device 16 currently being used by that user.

In one embodiment, the device settings file 22 is created and revised by a user through the wireless communication device 16. In this embodiment, the wireless communication device 16 acts as a user interface for uploading the device settings file 22 to the base station 18. In another embodiment, the device settings file 22 is entered into the base station 18 by a separate graphical user interface (not expressly shown). In this embodiment, a user may modify the respective user's device settings file 22 by uploading a revised version of the device settings file 22 to the base station 18.

Each device settings file 22 contains personalized user information for the wireless communication device 16. For example, the personalized user information may include a phone list, macro programs, device information, and the like. It will be understood that the device settings file 22 may comprise other suitable information for configuring the wireless communication device 16 without departing from the scope of the present invention.

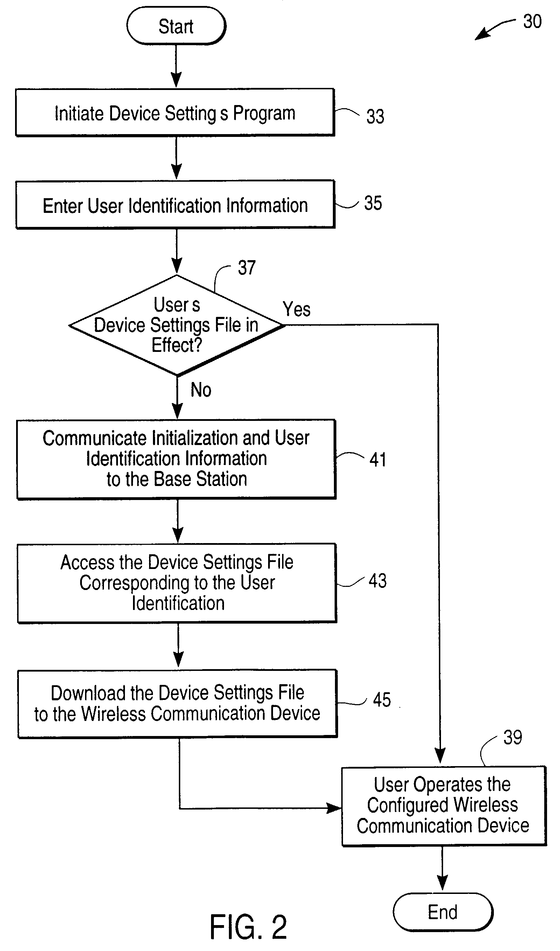

FIGURE 2 is a schematic flow diagram illustrating a downloading operation of a device settings program 30 for the wireless communication system 12. The downloading operation configures the wireless communication device 16 with the user's respective device settings file 22, thereby personalizing the wireless communication device 16.

As shown by step 33, the device settings program 30 is initiated from the wireless communication device 16. The device settings program 30 may be initiated at different times during the operation of the wireless communication device 16. In one embodiment, the device settings program 30 is initiated at the time that the wireless communication device 16 is turned on. In this embodiment, the wireless communication device 16 cannot be operated without entering user identification information. As will be discussed in greater detail below, the user identification information may include a password or other such security system for preventing unauthorized access to a user's device settings file 22.

In another embodiment, the device settings program is initiated on command by the user. In a particular embodiment, the wireless communication device 16 can be operated without providing access to the personalized user information contained in the device settings file 22 of the wireless communication device 16. In another embodiment, the device settings file 22 stored in the wireless communication device 16 can be used by any operator of the communication device 16. In this embodiment, changes to the device settings file 22 are made by initiating the device settings program 30.

In yet another embodiment, the device settings program 30 is initiated when access to the personalized user information contained in the device settings file 22 stored in the wireless communication device 16 is attempted. In this embodiment, user identification information may be required prior to providing a user with access to the personalized user information contained in the device settings file 22. It will be understood that the device settings program 30 may be initiated at other times during the operation of the wireless communication device 16 without departing from the scope of the present invention.

As shown by step 35, the user identification information is entered into the wireless communication device 16. The user identification information operates to identify the user, or operator, of the wireless communication device 16. The user identification information may comprise a user code, a password, a verification code, and the like. The user identification information may by used as a security measure to prevent unauthorized access to the user's device settings file 22. The user identification information could also be used in a privilege access system. The privilege access system may include a number of privilege levels with the different privilege levels providing varying levels of user access to the wireless communication system 12. For example, a privilege level can be associated with users that are authorized to make long distance phone calls, and a different privilege level can be associated with users that are not authorized to make long distance phone calls.

As shown by steps 37 and 39, when the user's device settings file 22 is in effect, the user operates the wireless communication device 16. The wireless communication device 16 is personalized in accordance with the respective user's settings that the user stored in the device settings file 22.

As shown by steps 37 and 41, when the user's device settings file 22 is not in effect, the wireless communication device 16 communicates the initialization and user identification information to the base station 18. The device settings file 22 corresponding to the respective user identification information is accessed, as shown by step 43. The accessed device settings file 22 is then downloaded from the base station 18 to the wireless communication device 16, as shown by step 45. The downloading operation generally configures the wireless communication device 16 with the personalized user information contained in the downloaded device settings file 22. The wireless communication device 16 may then be operated using the personalized user information, as shown by step 39. It will be understood that other suitable operations may be performed by the device settings program 30 without departing from the scope of the present invention. For example, as will be described in greater detail below, the device settings program 30 also operates to upload and save changes to the user's respective device settings file 22.

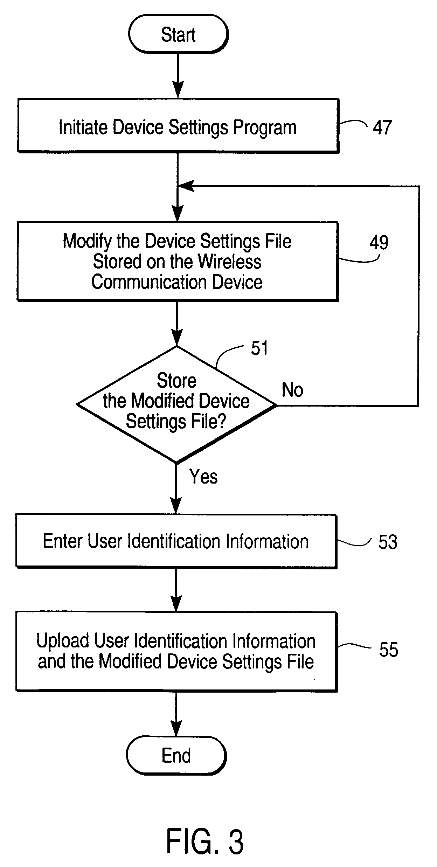

FIGURE 3 is a schematic flow diagram illustrating an uploading operation of the device settings program 30 for the wireless communication system 12. The uploading operation allows a user to change the personalized user information stored in the device settings file 22 stored by the base station 18.

As shown by step 47, the device settings program 30 is initiated by the user from the wireless communication device 16. In this embodiment, the wireless communication device 16 is already configured with the user's respective device settings file 22.

As shown by step 49, the user modifies the user's device settings file 22 stored on the wireless communication device 16. In some applications, the user will not have the authority to modify all aspects of the device settings file 22. For example, in an embodiment in which the device settings file 22 incorporates a privilege access system, the user will not generally have the authority to change their own privilege level.

As shown by step 51, the user can choose whether to store the modified device settings file 22. In one embodiment, if the user does not choose to store the modified device settings file 22, the modifications are canceled and the user is given the opportunity to modify the device settings file 22. In another embodiment, not expressly shown, the device settings program 30 is canceled when the modified device settings file 22 is not stored.

As shown by step 53, if the user chooses to store the modified device settings file 22, the user enters the user identification information to verify the identity of the user. In an embodiment in which the user already entered the user identification information, the user may not be required to enter the user identification information for verification of the identity of the user.

As shown by step 55, the user identification information and the modified device settings file 22 are uploaded from the wireless communication device 16 to the base station 18, where the modified device settings file 22 is stored. The modified device settings file 22 may then be downloaded to any generic wireless communication device 16, thereby personalizing the wireless communication device 16 for the user.

As discussed previously, the wireless communication system allows inexpensive generic wireless communication devices to be personalized for different users. In addition, the wireless communication system may include security and privilege access systems that provide user flexibility while maintaining control of access to the wireless communication system.

Although the present invention has been described in several embodiments, various changes and modifications may be suggested to one skilled in the art. It is intended that the present invention encompasses such changes and modifications that fall within the scope of the appended claims.

## Claims

1. A wireless communication system (12) comprising
a plurality of communication devices (16), with each wireless communication device (16) operable to receive and store a device settings file (22); and
a base station (18) for communicating with the plurality of wireless communication devices (16), the base station (18) operable to store a plurality of device settings files (22) and download an individual device settings file (22) to an individual wireless communication device (16).

2. A wireless communication system (12) according to claim 1, wherein the base station (18) comprises a security system operable to prevent unauthorized downloading of an individual device settings file (22).

3. A wireless communication system (12) according to claim 2, wherein the security system comprises a user identification or password function; the user identification or password being entered into the communication device (16) and transmitted to the base station (18).

4. A wireless communication system (12) according to any of the preceding claims, further comprising a privilege access system having a number of privilege levels that operate to restrict the operation of the wireless communication system (12).

5. A wireless communication system (12) according to any of the preceding claims, wherein the device settings file (22) comprises a list of phone numbers.

6. The wireless communication system (12) according to any of the preceding claims, wherein the wireless communication device (16) operates to provide modification of the downloaded device settings file (22) and uploading of the modified device settings file (22) to the base station (18).

7. A wireless communication system (12) according to any of the preceding claims, wherein the base station (18) and/or at least one wireless communication device (16) comprises a transceiver.

8. A wireless communication system (12) according to any of the preceding claims comprising a cordless telephone system, in which
the plurality of wireless communication devices (16) comprises a plurality of cordless telephones.

9. A wireless communication system (12) according to claim 4, wherein the base station (18) comprises the privilege access system.

10. A method of configuring a wireless communication system comprising:
initiating a device settings program (30) in a wireless communication device (16);
entering user identification information into the wireless communication device (16);
requesting a device settings file (22) that corresponds to the user identification information to be downloaded from a base station (18) to the wireless communication device (16); and
downloading the device settings file (22) from a base station (18) to the wireless communication device (16).

11. A method according to claim 10, further comprising:
modifying the downloaded device settings file (22); and
uploading the modified device settings file (22) to the base station (18).

12. A method according to claim 10 or 11, wherein the user identification information comprises a user identifier code.

13. A method according to any preceding method claim, wherein initiating a device settings program (30) comprises initiating a device settings program (30) at the startup of a wireless communication device (16).

14. A method according to any of claims 10 to 12, wherein initiating a device settings program (30) comprises initiating a device settings program (30) of a wireless communication device (16) upon command.

15. A method according to any preceding method claims, where the wireless communication device (16) comprises a cordless telephone.
